# EUROPÄISCHE PATENTANMELDUNG

(11) **EP 3 130 551 A1**
(43) Veröffentlichungstag der Anmeldung: **15.02.2017**
(21) Anmeldenummer: 16183181.3
(22) Anmeldetag: 08.08.2016
(51) Int. Cl.: B65G 1/04

(54) **HOCHREGALLAGER FÜR HÄNGENDE WAREN**

(30) Priorität: 12.08.2015 DE 102015113274
(71) Anmelder: psb intralogistics GmbH, 66955 Pirmasens (DE)
(72) Erfinder: KÖLSCH, Ernst, 66957 Vinningen (DE); ROHDE, Christoph, 66955 Pirmasens (DE); MÜLLER, Martin, 66957 Vinningen (DE); GLÄNZEL, Ralf, 66957 Ruppertsweiler (DE)
(74) Vertreter: Patentanwälte Dr. Keller, Schwertfeger

(57) **Zusammenfassung**

Die vorliegende Erfindung betrifft ein Hochregallager für Hängewaren mit wenigstens einem Hochregal, Lagerstangen (40) und einem Fahrgerät mit einer Entnahmeeinheit (16), wobei die Entnahmeeinheit (16) eine Lagerstangenübertragungseinheit (18) mit einer Basis (22) umfasst, an der zwei nebeneinander, mit Abstand voneinander angeordnete und im Wesentlichen quer zur Basis wegweisende Trägerarme (24) vorgesehen sind, und wobei die Lagerstangenübertragungseinheit (18) eine Grundstellung aufweist, in der die beiden freien Enden der Trägerarme (24) einen vorgegebenen ersten Abstand zueinander aufweisen, und wobei die Lagerstangenübertragungseinheit (18) eine Betriebsstellung aufweist, in der die beiden freien Enden der Trägerarme (24) einen vorgegebenen zweiten Abstand aufweisen, der größer als der vorgegebene erste Abstand der freien Enden der Trägerarme (24) in der Grundstellung ist.

## Beschreibung

Die vorliegende Erfindung betrifft ein Hochregallager für hängende Waren.

Bei vielen Waren wie etwa bei Bekleidungsstücken hat es sich als vorteilhaft erwiesen, diese in der Produktion oder im Lager auf Kleiderbügeln hängend zu transportieren und/oder zu lagern.

Um ein großes Lager platzsparend zu gestalten, haben sich in vielen Bereichen Hochregallager bewährt. So wurden auch für hängende Waren Hochregallager entwickelt, welche eine sehr hohe Lagerkapazität besitzen und gleichzeitig den direkten Zugriff auf die Ware erlauben.

Ein Hochregallager für hängende Waren besteht aus einer Vielzahl von Hochregalen, die mittels Lagergassen voneinander getrennt sind.

Die Hochregale für hängende Waren bestehen hierbei üblicherweise aus vertikalen Ständern, an denen Halterungen zur Aufnahme von Lagerstangen vorgesehen sind und besitzen eine Vielzahl von Lagerebenen, wobei in einer Lagerebene ein oder mehrere nebeneinander oder hintereinander angeordnete Lagerplätze vorgesehen sein können.

Ein solches Hochregallager für hängende Waren ist beispielsweise aus der EP 0 899 217 A1 bekannt.

Die Waren wie etwa Bekleidungsstücke oder andere hängende Waren hängen bei dem aus der EP 0 899 217 A1 bekannten Hochregallager an den beweglichen Lagerstangen und werden zusammen mit den Lagerstangen transportiert und in die Lagerplätze der Hochregale eingelagert. Beim Auslagern der Waren werden die Waren zusammen mit der Lagerstange aus dem Lagerplatz entnommen. Somit verbleibt die hängende Ware so lange wie möglich während des Transports und während der Lagerung an den beweglichen Lagerstangen.

In den Lagergassen zwischen den Hochregalen befinden sich üblicherweise Fahrgeräte, mit deren Hilfe das Ein- und Auslagern der leeren oder bestückten Lagerstangen in die Hochregale erfolgt.

Die Fahrgeräte sind in der Lage, die Lagerstangen mit der hängenden Ware in vertikaler und/oder in horizontaler Ebene zwischen den Hochregalen zu verschieben. Hierfür umfassen die Fahrgeräte wie etwa Regalbediengeräte beispielsweise Hub- und Teleskopvorrichtungen. Darüber hinaus weisen die Fahrgeräte eine Entnahmeeinheit auf, mittels derer die leeren oder bestückten Lagerstangen in dem Hochregal aufgenommen werden können.

Bei dem in der EP 0 899 217 A1 beschriebenen Fahrgerät in Form eines Regalbediengeräts ist an einem Hubwagen ein Paar von Teleskoparmen angeordnet und bildet so die Entnahmeeinheit. An den Spitzen der Teleskoparme befindet sich je eine Halterung für eine Lagerstange. Die Teleskoparme werden ausgefahren, um Lagerstangen ein- oder auszulagern.

Der Abstand der beiden Teleskoparme zueinander gibt somit den Bereich an, in dem die hängenden Kleiderstücke auf der Lagerstange angeordnet sein sollten, um sicherzustellen, dass die Teleskoparme beim Aufnehmen der Lagerstange alle hängenden Kleiderstücke umschließen, so dass die auf der Lagerstange hängenden Kleiderstücke sicher von einem Ort zu einem anderen Ort transportiert werden zu können. Bei der in EP 0 899 217 A1 beschriebenen Ausführungsform ist somit darauf zu achten, dass sich direkt an den beiden Enden der Lagerstangen, an denen die Teleskoparme angreifen, keine hängenden Kleiderstücke befinden.

Um Lagerkapazitäten optimal auszunutzen, ist es wünschenswert, die Lagerstange maximal, mit anderen Worten bis an die Enden der Lagerstange, ausnutzen zu können.

Es ist Aufgabe der vorliegenden Erfindung, ein Hochregallager für hängende Waren bereitzustellen, bei dem die Lagerkapazität im Vergleich zu bekannten Hochregallagern unter Verbesserung der Positioniergenauigkeit weiter erhöht ist.

Bei einigen Hochregallagern hat sich der Einsatz von drehbaren Entnahmeeinheiten bewährt. Hierbei werden die leeren oder bestückten Lagerstangen beispielsweise in den Regalgassen um 180° gedreht, um von einer Lagerposition in eine andere Lagerposition überführt zu werden.

Eine weitere Aufgabe der vorliegenden Erfindung ist die Reduzierung der Einflüsse auf die hängende Ware durch den Fahrtwind bei schneller Fahrt oder während der Drehbewegungen der Entnahmeeinheit, um auch bei höherer Geschwindigkeit die Transportaufgaben sicher durchzuführen.

Erfindungsgemäß wird die Aufgabe durch ein Hochregallager für Hängewaren gelöst mit wenigstens einem Hochregal, Lagerstangen und einem Fahrgerät mit einer Entnahmeeinheit, wobei die Entnahmeeinheit eine Langerstangenübertragungseinheit mit einer Basis umfasst, an der zwei nebeneinander mit Abstand voneinander angeordnete und im Wesentlichen quer zur Basis weisende Trägerarme vorgesehen sind und wobei die Lagerstangenübertragungseinheit eine Grundstellung aufweist, in der die beiden freien Enden der Trägerarme einen vorgegebenen ersten Abstand zueinander aufweisen und wobei die Lagerstangenübertragungseinheit eine Betriebsstellung aufweist, in der die beiden freien Enden der Lagerarme einen vorgegebenen zweiten Abstand aufweisen, der größer als der vorgegebene erste Abstand der freien Enden der Trägerarme in der Grundstellung ist.

Im Rahmen der Erfindung bedeutet eine Anordnung der Trägerarme im Wesentlichen quer zur Basis, dass die Trägerarme nicht parallel zur Basis ausgerichtet sind. Vorzugsweise sind die Trägerarme in der Grundstellung parallel zueinander und jeweils in etwa rechtwinklig zu der Basis ausgerichtet.

Während des Transports der Entnahmeeinheit mittels des Fahrgeräts befindet sich die Lagerstangenübertragungseinheit in ihrer Grundstellung.

Die Grundstellung hat den Vorteil, dass zum einen die Entnahmeeinheit platzsparend ausgebildet ist, um beispielsweise versehentliches Hängenbleiben von Trägerarmen an Regalstangen oder dergleichen zu verhindern. Zum anderen bewirkt der im Vergleich zum Betriebszustand geringere Abstand zwischen den Trägerarmen der Lagerstangenübertragungseinheit eine Fixierung des Warenbündels, welches sich zum Transport in der Entnahmeeinheit befindet.

Zur Entnahme der auf einer Lagerstange hängenden Ware aus dem Hochregal wird die Lagerstangenübertragungseinheit jedoch in die Betriebsstellung geführt, um die auf der Lagerstange hängende Ware mit einem möglichst großen Abstand zu umgreifen. Dies hat den Vorteil, dass ein versehentliches Eingreifen der Trägerarme der Lagerstangenübertragungseinheit zwischen einzelne Warenstücke vermieden wird, wenn beispielsweise die hängende Ware an den äußersten Enden der Lagerstange angeordnet ist.

Darüber hinaus können die Trägerarme die auf der Lagerstange hängende Ware beim Übergang von der Betriebsstellung in die Grundstellung von außen zusammenschieben, so dass einerseits für die Lagerung der hängenden Ware die maximale Länge der Lagerstange zur Verfügung steht und andererseits die Entnahmeeinheit die Lagerstange mit hängender Ware sicher greifen kann.

Bei einer bevorzugten Ausführungsform ist wenigstens ein Trägerarm der Lagerstangenübertragungseinheit schwenkbar an der Basis befestigt.

Hierbei ist es weiter bevorzugt, dass beide Trägerarme schwenkbar an der Basis befestigt sind, so dass die nach außen geschwenkten Trägerarme in der Betriebsstellung wie eine trichterförmige Einführung für das Warenbündel wirken.

Beispielsweise ist bei dieser Ausführungsform eine Betätigungsvorrichtung für die schwenkbaren Trägerarme vorgesehen, die mittels einer Exzenterwelle die beiden Trägerarme betätigt.

Bei einer ersten alternativen Ausführungsform sind die Trägerarme drehfest an der Basis befestigt und die Lagerstangenübertragungseinheit weist eine Verschiebevorrichtung auf, mittels derer wenigstens ein Trägerarm entlang der Achse der Basis verschiebbar ist. Bei dieser Ausführungsform erweitert sich der Aufnahmebereich zwischen den Trägerarmen gleichmäßig.

Hierbei ist es gemäß einer vorteilhaften Weiterbildung bevorzugt, dass beide Trägerarme entlang der Achse der Basis verschiebbar sind.

Bei einer zweiten alternativen Ausführungsform ist wenigstens ein Trägerarm der Lagerstangenübertragungseinheit schwenkbar an der Basis befestigt und entlang der Längsachse der Basis verschiebbar.

Es ist weiter von Vorteil, dass an den freien Enden der Trägerarme jeweils eine Aufnahme vorgesehen ist, die zur Aufnahme einer Lagerstange geeignet ist. Beispielsweise ist die Aufnahme als Vertiefung an der Oberseite des Trägerarms oder als Greifelement ausgebildet.

Bei einer bevorzugten Weiterbildung weist die Entnahmeeinheit eine Positioniervorrichtung für die Lagerstangen auf, die mit Positionsmarkierungen am Hochregal wechselwirken, um die Lagerstangen positionsgenau in ein Hochregal zu übergeben oder aus einem Hochregal zu entnehmen.

Insbesondere bei Fahrgeräten mit einer Drehvorrichtung ist es von Vorteil, dass eine Bündelzentrierung vorgesehen ist, zwischen der das Warenbündel angeordnet ist. Hierdurch werden Schwingungen des Warenbündels während der Drehbewegung weiter reduziert.

Beispielsweise weist die Bündelzentrierung ein im Wesentlichen U-förmig ausgebildetes Gestänge auf und ist unterhalb der Lagerstangenübertragungseinheit angeordnet.

Alternativ ist als Bündelzentrierung eine Anschlagleiste vorgesehen, die im Falle von biegesteifen Waren ausreichend ist,

Es ist weiter von Vorteil, dass eine Stangenzentrierung vorgesehen ist. Mit Hilfe der Stangenzentrierung lassen sich die Lagerstangen mittig in einen Lagerplatz einführen.

Zur Verschiebung der Lagerstangenübertragungseinheit ist es von Vorteil, dass das Fahrgerät eine Teleskopvorrichtung aufweist, die mit der Entnahmeeinheit verbunden ist.

Das Fahrgerät ist gemäß einer bevorzugten Weiterbildung ein Regalbediengerät, ein Shuttle oder ein Lift.

Bevorzugte Ausführungsformen werden anhand der beigefügten Zeichnungen näher erläutert, in denen zeigen:
- Fig. 1: eine Entnahmeeinheit in Seitenansicht,
- Fig. 2: eine perspektivische Ansicht einer Lagerstangenübertragungseinheit,
- Fig. 3: eine Draufsicht auf die Entnahmeeinheit in einer Grundstellung,
- Fig. 4: eine Draufsicht auf die Entnahmeeinheit in einer Betriebsstellung, und
- Fig. 5: eine Entnahmeeinheit und eine Stangenzentrierung.

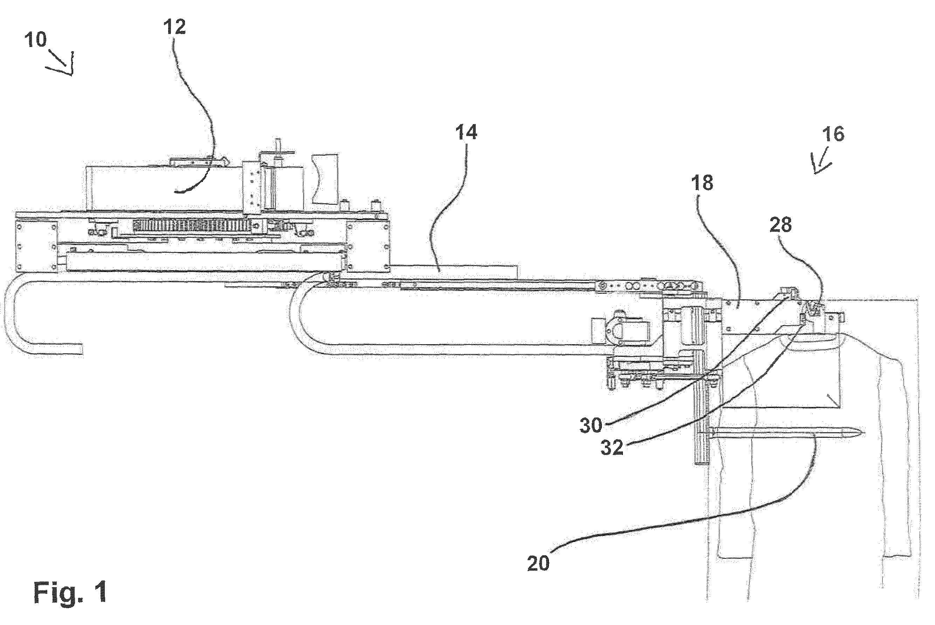

Fig. 1 zeigt einen Ausschnitt aus einem Regalbediengerät 10 mit einer Dreheinrichtung 12, einer Teleskopvorrichtung in Form eines Teleskoptisches 14 und einer Entnahmeeinheit 16. Die Entnahmeeinheit 16 ist über den Teleskoptisch 14 mit der Dreheinrichtung 12 verbunden. Die Entnahmeeinheit 16 umfasst eine Lagerstangenübertragungseinheit 18 und eine Bündelzentrierung 20.

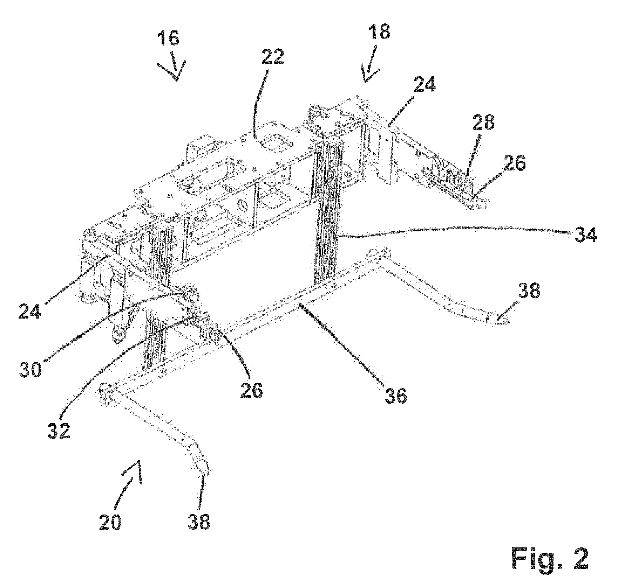

Fig. 2 zeigt die Entnahmeeinheit 16 im Detail. Die Lagerstangenübertragungseinheit 18 weist eine Basis 22 auf, an der zwei nebeneinander, mit Abstand voneinander angeordnete Trägerarme 24 vorgesehen sind. Die Trägerarme 24 sind an einem Ende schwenkbar mit der Basis 22 verbunden und die freien Enden weisen von der Basis weg. In einem Grundzustand sind die beiden Trägerarme 24 im Wesentlichen parallel zueinander und im Wesentlichen senkrecht zu der Basis 22 angeordnet. In Draufsicht weisen die beiden Trägerarme 24 und die Basis 22 eine U-förmige Anordnung auf.

Zur Betätigung der Trägerarme 24 ist in der Basis 22 eine Betätigungsvorrichtung beispielsweise mit einer Exzenterwelle vorgesehen.

Die Trägerarme 24 und die Basis 22 sind vorzugsweise aus einem Metall hergestellt. Es ist jedoch auch die Verwendung anderer Materialien wie etwa Kunststoff möglich.

An den freien Enden der Trägerarme 24 befindet sich auf der Innenseite der Trägerarme 24 jeweils eine Führungsleiste 26, vorzugsweise aus Kunststoff, die nach außen abgewinkelt bzw. gekrümmt ist. Im Bereich der freien Enden der Trägerarme 24 ist darüber hinaus auf der Oberseite jedes Trägerarms eine V-förmige Aufnahme 28 für die Aufnahme einer Lagerstange vorgesehen. Die Aufnahmen 28 befinden sich bei jedem Trägerarm 24 im gleichen Abstand von der Basis 22, so dass die in der Entnahmeeinheit 16 aufgenommene Lagerstange im Wesentlichen parallel zu der Basis 22 ausgerichtet ist.

An jedem Trägerarm sind weiterhin am freien Ende ein erster Sensor 30 und ein zweiter Sensor 32 angebracht, die mit Positionsmarkierungen im Hochregallager wechselwirken, um die Lagerstangen pass- und positionsgenau in der gewünschten Ablageposition im Hochregallager einzulagern bzw. aus der Ablageposition zu entnehmen. Die Sensoren 30, 32 sind in unterschiedlicher Höhe angebracht. So befindet sich der erste Sensor 30 an der Oberseite des Trägerarms 24 und der zweite Sensor 32 im Bereich der Vertiefung der Aufnahme 28.

Die Sensoren 30, 32 können beispielsweise als optische Sensoren ausgebildet sein.

Unterhalb der Lagerstangenübertragungseinheit 18 ist die Bündelzentrierung 20 mit Abstand von der Lagerstangenübertragungseinheit 18 angeordnet und über Stangen 34 mit der Lagerstangenübertragungseinheit 18 verbunden. An einer Bündelzentrierungsbasis 36 sind zwei im Abstand voneinander angeordnete Zinken 38 befestigt, wobei die Zinken als Führungsarme für die seitliche Führung der zur transportierenden Waren wirken. Das aus der Bündelzentrierungsbasis 36 und den beiden Zinken 38 gebildete Gestänge der Bündelzentrierung 20 weist eine U-förmige Grundform auf, wobei die Größe und Ausrichtung der U-förmigen Grundform in etwa der Größe und der Ausrichtung der U-förmigen Anordnung der Lagerstangenübertragungseinheit 18 entsprechen.

Die Zinken 38 sind an den freien Enden abgewinkelt und weisen nach außen. Die Zinken 38 sind beispielsweise aus einem Kunststoff hergestellt.

Die Länge der Stangen 34 ist an die zu transportierenden Waren angepasst. Der Abstand zwischen Bündelzentrierung 20 und Lagerstangenübertragungseinheit 18 ist vorzugsweise so gewählt, dass die Bündelzentrierung 20 die hängende Ware seitlich führen kann, wobei der Abstand zwischen Bündelzentrierung 20 und Lagerstangenübertragungseinheit 18 möglichst groß gewählt ist.

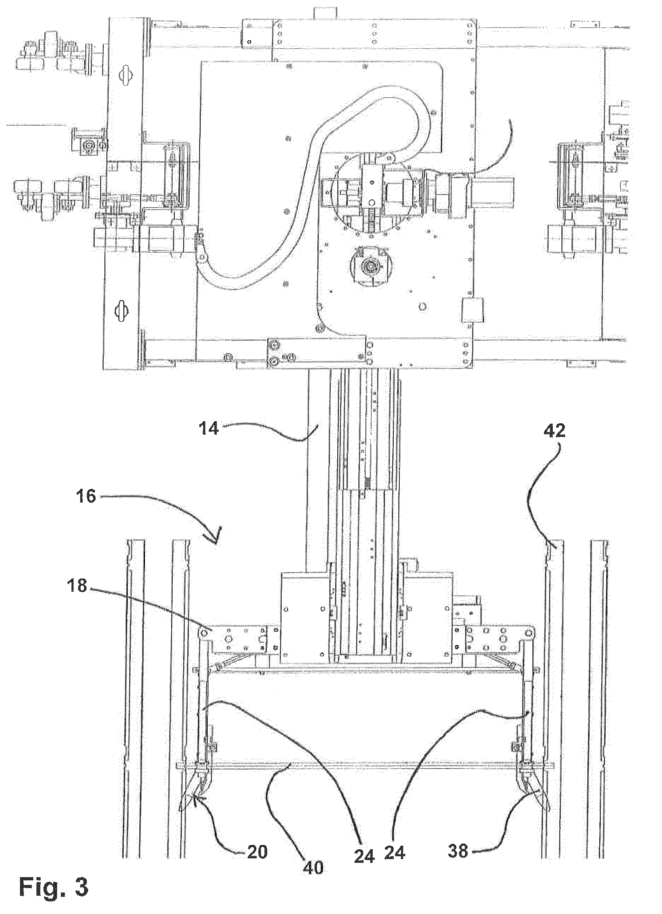

Fig. 3 zeigt einen Teil einer Regalbetriebseinheit 10 in Draufsicht, bei der sich die Lagerstangenübertragungseinheit 18 in Grundstellung befindet.

In der Grundstellung sind beide Trägerarme 24 im Wesentlichen parallel zueinander ausgerichtet. Der Abstand der freien Enden der Trägerarme 24 ist ausgelegt, eine Lagerstange 40 bestimmungsgemäß zu greifen und/oder zu halten.

Üblicherweise befindet sich die Lagerstangenübertragungseinheit 18 in der in Fig. 3 dargestellten Grundstellung. Diese Grundstellung nimmt die Lagerstangenübertragungseinheit 18 insbesondere dann ein, wenn die Lagerstangenübertragungseinheit 18 ohne Lagerstange 40 mittels des Regalbediengeräts im Hochregallager verlagert wird. In dieser Grundstellung befindet sich die Lagerstangenübertragungseinheit 18 auch dann, wenn sie während der Verlagerung einer leeren, teilbeladenen oder beladenen Lagerstange 40 in dem Hochregallager diese in den Aufnahmen 28 der Trägerarme 24 hält.

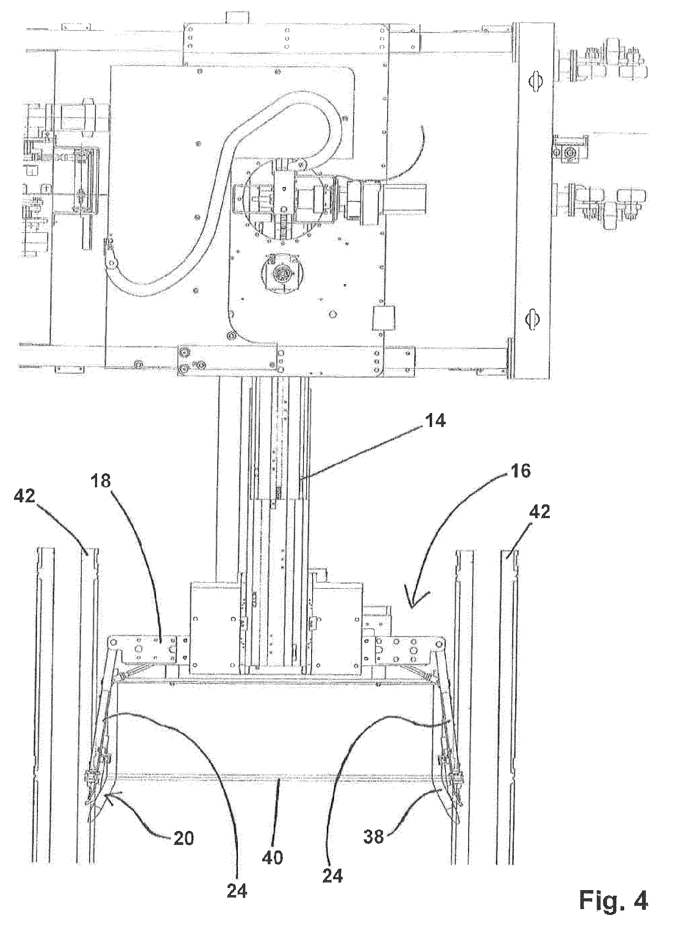

Fig. 4 zeigt die Ansicht eines Teils eines Regalbediengeräts mit einer Lagerstangenübertragungseinheit 18 in Betriebsstellung.

In Betriebsstellung sind die beiden Lagerarme 24 nach außen geschwenkt, so dass der Abstand zwischen den freien Enden der Trägerarme 24 größer ist als in der Grundstellung. Die Lagerstangenübertragungseinheit 18 nimmt die Betriebsstellung insbesondere dann ein, wenn die Entnahmeeinheit 16 an einer vorbestimmten Lagerposition in das Hochregal eingefahren wird, um ein Warenbündel aus dem Hochregallager zu entnehmen.

Darüber hinaus ist es von Vorteil, jedoch nicht zwingend notwendig, dass die Entnahmeeinheit 16 auch dann in die Betriebsstellung geht, wenn eine Lagerstange 40 mit Warenbündel in ein gewünschte Lagerposition im Hochregal eingeführt ist und die Entnahmeeinheit 14 dann wieder aus dem Hochregal herausgeführt wird.

Die Funktionsweise des Regalbediengeräts wird insbesondere mit Bezug auf die Fig. 3 und 4 näher erläutert.

Es wird nun der Vorgang beschrieben, bei dem eine mit Ware bestückte Lagerstange 40 aus einem Lagerplatz in einem Hochregal entnommen werden soll.

Ein Hochregallager besteht aus einer Vielzahl von Hochregalen, die mittels Lagergassen voneinander getrennt sind. In den Lagergassen zwischen den Hochregalen befinden sich Regalbediengeräte10, mit deren Hilfe das Ein- und Auslagern der Lagerstangen 40 in die Hochregale erfolgt. Die Lagerstangen 40 können hierbei leer oder bestückt sein. Die Regalbediengeräte 10 sind in der Lage, die Lagerstangen 40 in vertikaler und in horizontaler Ebene zu verschieben.

Hochregale für hängende Waren bestehen üblicherweise im Wesentlichen aus vertikalen Ständern, an denen Halterungen oder Aufnahmewinkel zur Aufnahme von Lagerstangen 40 vorgesehen sind, an denen die Ware beispielsweise mittels Kleiderbügeln hängt. Ein Hochregal besitzt eine Vielzahl von Lagerebenen, wobei in einer Lagerebene ein oder mehrere nebeneinander oder hintereinander angeordnete Lagerplätze vorgesehen sein können.

In den Fig. 3 und 4 ist ein solches Hochregal eines Hochregallagers angedeutet, in dem die Auflagewinkel 42 des Hochregals dargestellt sind.

Das Regalbediengerät 10 führt die Entnahmeeinheit 16 an den gewünschten Lagerplatz im Hochregal, wobei die Trägerarme 24 in Richtung des gewünschten Lagerplatzes zeigen und überprüft mittels nicht dargestellter Sensoreinrichtungen die Position der Entnahmeeinheit 16 in Bezug auf den Lagerplatz im Hochregal und korrigiert dann gegebenenfalls ihre Position.

Daraufhin überprüft ein weiterer, nicht dargestellter Sensor den Zustand des Lagerplatzes, insbesondere, ob sich dort tatsächlich eine Lagerstange mit Ware befindet.

Zur Entnahme der Lagerstange wird die Entnahmeeinheit 16, insbesondere die Lagerstangenübertragungseinheit 18 abgesenkt, so dass ein Unterfahren der Lagerstange 40 im Lagerfach möglich ist.

Mittels der nicht dargestellten Betätigungsvorrichtung der Entnahmeeinheit 16 werden die Trägerarme 24 nach außen geschwenkt. Der Teleskoptisch 14 führt die Entnahmeeinheit 16 in den Lagerplatz ein. Hierbei umgreifen die Trägerarme 18 der Lagerstangenübertragungseinheit 18 das an einer Lagerstange 14 angeordnete Warenbündel. Das Warenbündel, insbesondere die Kleiderbügel gelangen hierbei trichterförmig in den Aufnahmebereich, der von den beiden Trägerarmen 24 der Lagerstangenübertragungseinheit 18 gebildet wird.

Die gespreizten Trägerarme 24 werden unterhalb der Auflagewinkel 42 in das Lagerfach eingefahren, so dass keine Kollision der Trägerarme 24 mit den Auflagewinkel 42 erfolgt. Der Abstand der freien Enden der beiden Trägerarme in der gespreizten Stellung ist so gewählt, dass die Trägerarme 24 das Warenbündel sicher umgreifen. Vorzugsweise entspricht der Abstand der freien Enden der beiden Trägerarme 24 in etwa der Länge der Lagerstange 40.

Zur exakten Ausrichtung der Übergabeposition der Lagerstange 40 mit den daran hängenden Waren von dem Hochregal auf die Lagestangenübertragungseinheit sind an dem Hochregal Markierungen vorgesehen, die von dem ersten Sensor 30 an der Oberseite des Trägerarms erfasst werden. Solche Markierungen können beispielsweise Aussparungen in dem Auflagewinkel 42 sein, wobei die Aussparungen eine vorgegebene geometrische Form wie etwa eine bestimmte Rechteckfolge oder Dreiecke aufweisen.

Befindet sich die Entnahmeeinheit 16 an der gewünschten exakten Endposition unterhalb der Lagerstange 40, werden die beiden Trägerarme 24 nach innen geschwenkt, so dass das Warenbündel zwischen den beiden Trägerarmen 24 sicher angeordnet ist und gegebenenfalls zentriert wird.

Das Regalbediengerät 10 bewegt sich nach oben und greift die Lagerstange 40, so dass diese aus Aufnahmeaussparungen der Auflagewinkel 42 herausgeführt wird und in den Auflagen 28 zum Liegen kommt. Der Teleskoptisch 14 zieht die Entnahmeeinheit 18 mit der mit Ware bestückten Lagerstange 40 aus dem Hochregal 20 heraus, so dass die Entnahmeeinheit 18 mit der Lagerstange 40 an die gewünschte neue Lagerposition des Warenbündels transportiert werden kann.

Zum erneuten Einlagern der Lagerstange 40 wird die auf der Entnahmeeinheit 18, insbesondere in den Auflagen 28 der Lagerstangenübertragungseinheit 18 befindliche Lagerstange 40 mittels des Regalbediengeräts 10 an die gewünschte neue Lagerposition im Hochregal geführt, wobei die Trägerarme 24 in Richtung der gewünschten Lagerposition zeigen. Das Regalbediengerät 10 überprüft mittels nicht dargestellter Sensoreinrichtungen die Position der Entnahmeeinheit 18 in Bezug auf den Lagerplatz im Hochregal und korrigiert dann gegebenenfalls ihre Position.

Daraufhin überprüft ein weiterer nicht dargestellter Sensor den Zustand des Lagerplatzes, insbesondere, dass sich dort tatsächlich keine Lagerstange befindet und der Lagerplatz zur Aufnahme einer Lagerstange 40 bereit ist.

Mittels des Teleskoptisches 14 wird die Entnahmeeinheit 18 mit der Lagerstange 40 in den Lagerplatz eingeführt.

Zur exakten Ausrichtung der Übergabeposition der Lagerstange 40 mit den Waren von der Lagerstangenübertragungseinheit 18 auf das Hochregal werden die auf dem Hochregal angebrachten Markierungen mittels des zweiten Sensors 32 im Bereich der Vertiefung der Aufnahme 28 abgetastet.

Befindet sich die Entnahmeeinheit 16 an der gewünschten exakten Endposition, nämlich mittig über der Aufnahme 28, stoppt die Teleskopbewegung und das Regalbediengerät 10 senkt die Entnahmeeinheit 16 ab, so dass die Lagerstange 40 mit der Ware in dafür vorgesehene Aufnahmeaussparungen der Auflagewinkel 42 im Hochregal aufgenommen werden kann. Die Absenkbewegung wird so lange durchgeführt, bis sich die Lagerstange 40 aus den Aufnahmen 28 der Entnahmeeinheit 16 löst und in den Aufnahmeaussparungen der Auflagewinkel 42 abgelegt ist. Anschließend wird die Lagerstangenübertragungseinheit 18 unterhalb der sich nun im Hochregal befindlichen Lagerstange mittels des Teleskoptisches aus dem Lagerplatz herausgeführt und steht dann für einen neuen Einsatz zur Verfügung.

Sowohl bei der Einlagerung von Lagerstangen als auch bei der Entnahme der Lagerstangen kann der Erfolg der Einlagerung oder der Entnahme mittels nicht dargestellter Sensoren überwacht werden.

Da ein Hochregal aus einer Vielzahl von Regalreihen besteht, besteht die Notwendigkeit, ein auf einer Lagerstange 40 angeordnetes Warenbündel zu drehen, um es beispielsweise an einem anderen Lagerplatz abzulegen. Bei der Drehbewegung wird die auf den Lagerstangen 40 befindliche Ware in Drehbewegung versetzt. Die Drehbewegung kann dazu führen, dass Ware von der Lagerstange 40 herunterfällt.

Um dies zu verhindern, ist die Bündelzentrierung 20 vorgesehen.

In analoger Weise wie die Lagerstangenübertragungseinheit 18 wird das Warenbündel bei Einführen der Entnahmeeinheit 18 in einen Lagerplatz von der Bündelzentrierung 20 umgriffen. Der Abstand der nach außen weisenden freien Enden der Zinken entspricht in etwa dem Abstand der freien Enden der Trägerarme 24 in Betriebsstellung.

Die nach außen weisenden Zinken 38 der Bündelzentrierung 20 bewirken ein trichterförmiges Einführen des Warenbündels zwischen den von den beiden Zinken 38 der Bündelzentrierung 20 gebildeten Aufnahmebereich. Die zwischen den Zinken 38 gehaltene Ware wird somit bei einer Drehbewegung des Regalbediengeräts gehalten und nicht oder nur geringfügig in Schwingung versetzt.

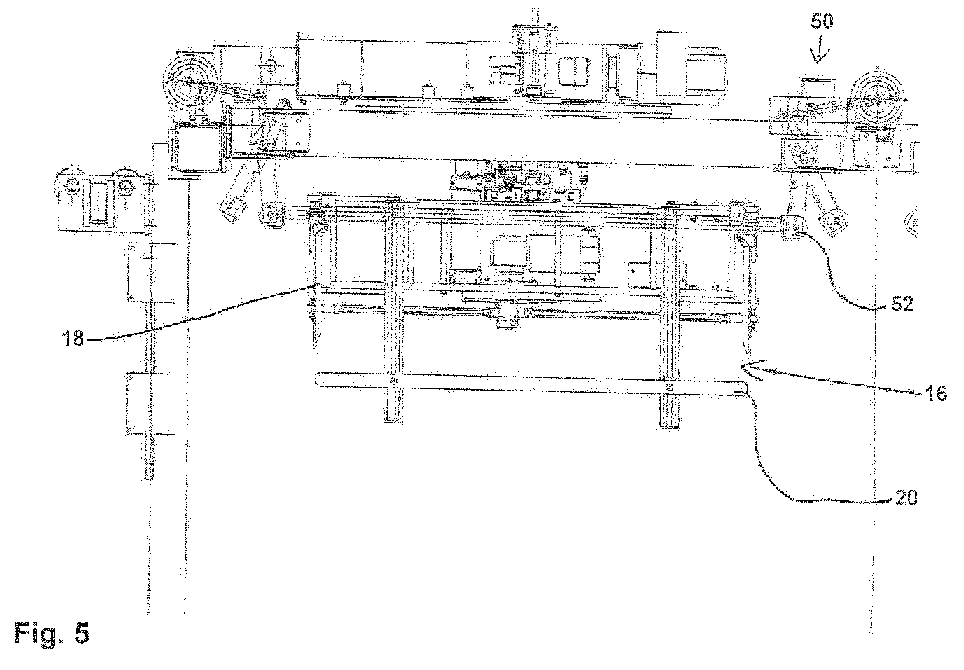

Fig. 5 zeigt ein weiteres Merkmal des erfindungsgemäßen Hochregallagers, nämlich eine Stangenzentrierung 50. Die Stangenzentrierung 50 umfasst zwei schwenkbare Arme 52, die an der Entnahmeeinheit 18 befestigt sind und beidseitig auf die Lagerstange 40 wirken, um diese in die gewünschte exakte, d.h. mittige Position zu bringen.

Die Stangenzentrierung 50 findet vor allem dann ihre Anwendung, wenn eine Lagerstange 40 in einen Lagerplatz eingeführt werden soll. Während des Transports der mit Waren bestückten oder leeren Lagerstange 40 kann die Lagerstange 40 auf der Entnahmeeinheit 18 verrutschen. So ist es sinnvoll, die Lagerstange 40 selbst vor dem Einlagern in einen Lagerplatz auszurichten, um diese möglichst mittig in dem Lagerplatz abzulegen. Hierbei wird die Entnahmeeinheit 18 in die gewünschte Position gebracht. Die Arme 52 der Stangenzentrierung 50 wirken seitlich auf die Lagerstange 20 und positionieren diese in der gewünschten mittigen Position.

Anstelle der in den Figuren dargestellten schwenkbaren Trägerarme können linear verschiebbare Trägerarme vorgesehen sein, so dass der Abstand zwischen den Trägerarmen entlang der Trägerarme, insbesondere an den freien Enden vergrößert wird.

Bei nicht dargestellten Ausführungsformen kann nur ein Trägerarm verschiebbar oder verschwenkbar sein. Ebenso ist es vorgesehen, dass wenigstens ein Trägerarm verschwenkbar und verschiebbar ist.

Anstelle einer Bündelzentrierung mit einem U-förmig ausgebildeten Gestänge kann eine Bündelzentrierung vorgesehen sein, die seitlich wenigstens eine Anschlagleiste als Führungsarm aufweist.

Bei einer weiteren, nicht dargestellten Ausführungsform kann die Bündelzentrierung Führungsarme aufweisen, von denen wenigstens ein Führungsarm schwenkbar ausgebildet ist. Die dargestellten Ausführungsformen umfassen eine Vielzahl von Merkmalen, die jeweils für sich betrachtet Vorteile gegenüber bisher bekannten Hochregallagern bieten.

So kann beispielsweise bei einer nicht dargestellten Ausführungsform eines Hochregallagers eine herkömmliche Entnahmeeinheit vorgesehen sein, die Positioniervorrichtungen wie etwa die Sensoren aufweist, welche mit Positionsmarkierungen am Hochregal wechselwirken, um eine passgenaue Übergabe der Lagerstange von der Entnahmeeinheit in ein Hochregal bzw. von einem Hochregal in eine Entnahmeeinheit zu erreichen.

Bei einer weiteren, nicht dargestellten Ausführungsform kann eine herkömmliche Entnahmeeinheit mit der beschriebenen Bündelzentrierung versehen sein.

Bei der in den Figuren dargestellten Ausführungsform eines Hochregallagers ist die Entnahmeeinheit an einem Regalbediengerät angeordnet.

Bei nicht dargestellten Ausführungsformen eines Hochregallagers ist die Entnahmeeinheit an einer anderen Art von Fahrgerät, welches sich zwischen den Gassen der Hochregale bewegt, angeordnet. Ein solches Fahrgerät ist beispielsweise ein in einer Regalebene fahrendes Shuttle, das sich nur in horizontaler Ebene bewegt, oder ein Lift, der sich nur in vertikaler Ebene bewegt.

Bei den dargestellten Ausführungsformen ist eine Aufnahme zur Aufnahme der Lagerstange als Vertiefung an der Oberseite des Trägerarms, insbesondere als V-förmige Vertiefung dargestellt. Es versteht sich, dass die Vertiefung auch einen andere als V-förmige Form, beispielsweise U-Form, rechteckige Form oder die Form eines Trapezes aufweisen kann.

Anstelle einer Vertiefung können auch Greifelemente wie etwa Greifzangen vorgesehen sein, um die Lagerstange mittels der Entnahmeeinheit zu greifen.

## Patentansprüche

1. Hochregallager für Hängewaren mit wenigstens einem Hochregal, Lagerstangen (40) und einem Fahrgerät mit einer Entnahmeeinheit (16), wobei
die Entnahmeeinheit (16) eine Lagerstangenübertragungseinheit (18) mit einer Basis (22) umfasst, an der zwei nebeneinander, mit Abstand voneinander angeordnete und im Wesentlichen quer zur Basis wegweisende Trägerarme (24) vorgesehen sind, und wobei die Lagerstangenübertragungseinheit (18) eine Grundstellung aufweist, in der die beiden freien Enden der Trägerarme (24) einen vorgegebenen ersten Abstand zueinander aufweisen, **dadurch gekennzeichnet, dass**
die Lagerstangenübertragungseinheit (18) eine Betriebsstellung aufweist, in der die beiden freien Enden der Trägerarme (24) einen vorgegebenen zweiten Abstand aufweisen, der größer als der vorgegebene erste Abstand der freien Enden der Trägerarme (24) in der Grundstellung ist.

2. Hochregallager nach Anspruch 1, **dadurch gekennzeichnet, dass** wenigstens ein Trägerarm (24) der Lagerstangenübertragungseinheit (18) schwenkbar an der Basis (22) befestigt ist.

3. Hochregallager nach Anspruch 2, **dadurch gekennzeichnet, dass** eine Betätigungsvorrichtung für die schwenkbaren Trägerarme (24) vorgesehen ist, wobei insbesondere die Betätigungsvorrichtung über eine Exzenterwelle ansteuerbar ist.

4. Hochregallager nach Anspruch 1, **dadurch gekennzeichnet, dass** die Trägerarme drehfest an der Basis befestigt sind und die Lagerstangenübertragungseinheit eine Verschiebevorrichtung aufweist, mittels derer wenigstens ein Trägerarm entlang der Längsachse der Basis verschiebbar ist.

5. Hochregallager nach Anspruch 1, **dadurch gekennzeichnet, dass** wenigstens ein Trägerarm der Lagerstangenübertragungseinheit schwenkbar an der Basis befestigt und entlang der Längsachse der Basis verschiebbar ist.

6. Hochregallager nach einem der vorhergehenden Ansprüche, **dadurch gekennzeichnet, dass** an den freien Enden der Trägerarme (24) jeweils eine Aufnahme (28) vorgesehen ist, die zur Aufnahme einer Lagerstange geeignet ist.

7. Hochregallager nach Anspruch 6, **dadurch gekennzeichnet, dass** die Aufnahme (28) als Vertiefung an der Oberseite des Trägerarms oder als Greifelement ausgebildet ist.

8. Hochregallager nach einem der vorhergehenden Ansprüche, **dadurch gekennzeichnet, dass** die Entnahmeeinheit (18) eine Positioniervorrichtung für die Lagerstangen (40) aufweist, die mit Positionsmarkierungen am Hochregal wechselwirken.

9. Hochregallager nach Anspruch 8, **dadurch gekennzeichnet, dass** die Positioniervorrichtung Sensoren (30, 32) umfasst.

10. Hochregallager nach einem der vorhergehenden Ansprüche, **dadurch gekennzeichnet, dass** die Entnahmeeinheit (16) eine Bündelzentrierung (20) aufweist.

11. Hochregallager nach einem der vorhergehenden Ansprüche, **dadurch gekennzeichnet, dass** die Bündelzentrierung einen schwenkbaren Führungsarm aufweist.

12. Hochregallager nach Anspruch 10 oder 11, **dadurch gekennzeichnet, dass** die Bündelzentrierung (20) ein im Wesentlichen U-förmig ausgebildetes Gestänge aufweist.

13. Hochregallager nach einem der Ansprüche 10 bis 12, **dadurch gekennzeichnet, dass** die Bündelzentrierung (20) unterhalb der Lagerstangenübertragungseinheit (18) angeordnet ist.

14. Hochregallager nach einem der vorhergehenden Ansprüche, **dadurch gekennzeichnet, dass** eine Stangenzentrierung (50) vorgesehen ist.

15. Hochregallager nach einem der vorhergehenden Ansprüche, **dadurch gekennzeichnet, dass** das Fahrgerät eine Teleskopvorrichtung aufweist, die mit der Entnahmeeinheit (16) verbunden ist.

16. Hochregallager nach einem der vorhergehenden Ansprüche, **dadurch gekennzeichnet, dass** das Fahrgerät ein Regalbediengerät, ein Shuttle oder ein Lift ist.
